# EUROPÄISCHE PATENTSCHRIFT

(11) **EP 2 379 400 B1**
(45) Veröffentlichungstag und Bekanntmachung des Hinweises auf die Patenterteilung: **19.09.2012**
(21) Anmeldenummer: 09768332.0
(22) Anmeldetag: 08.12.2009
(51) Int. Cl.: B62D 35/00

(54) **VERSTELL-VORRICHTUNG**
ADJUSTING FIXTURE
DISPOSITIF DE REGLAGE

(30) Priorität: 16.12.2008 DE 102008062150
(43) Veröffentlichungstag der Anmeldung: 26.10.2011
(73) Patentinhaber: Dr. Ing. h.c. F. Porsche AG, 70435 Stuttgart (DE)
(72) Erfinder: RÖMER, Michael, 90518 Altdorf (DE); PREIS, Johannes, 93077 Bad Abbach/Lengfeld (DE); JUNGERT, Dieter, 71287 Weissach (DE); HERRMANN, Bernd, 71139 Ehningen (DE); PAUL, Joachim, 70563 Stuttgart (DE)
(86) Internationale Anmeldenummer: PCT/EP2009/008727
(87) Internationale Veröffentlichungsnummer: WO 2010/072322

(56) Entgegenhaltungen:
- EP-A2- 1 118 529
- EP-A2- 1 693 285
- WO-A1-2008/041757
- JP-A- 5 112 265
- JP-A- 2005 212 719

## Beschreibung

Die Erfindung betrifft eine Vorrichtung zur Verstellung einer Luftleiteinrichtung an einem Kraftfahrzeug. Die Erfindung betrifft außerdem eine Anordnung umfassend eine Luftleiteinrichtung und eine Vorrichtung zur Verstellung derselben. Schließlich betrifft die Anmeldung ein Kraftfahrzeug mit einer derartig verstellbaren Luftleiteinrichtung.

Luftleiteinrichtungen (wie z.B. JP 05112265) für Kraftfahrzeuge dienen der Verbesserung der Stra-βenlage und der aerodynamischen Eigenschaften derselben insbesondere bei höheren Geschwindigkeiten. Hierbei ist es wünschenswert, die Stellung der Luftleiteinrichtung an die jeweiligen Erfordernisse und Umstände anpassen zu können.

Der Erfindung liegt daher die Aufgabe zugrunde, eine Vorrichtung zur verbesserten Verstellbarkeit einer Luftleiteinrichtung zu schaffen.

Diese Aufgabe wird durch die Merkmale der Ansprüche 1, 14 gelöst. Der Kern der Erfindung besteht darin, in der Verstell-Vorrichtung eine Linear-Verstell-Einrichtung zur Verstellung der Ausstellung der Luftleiteinrichtung mit einer Winkel-Verstell-Einrichtung zur Verstellung des Anstellwinkels der Luftleiteinrichtung zu kombinieren.

Vorzugsweise sind die Verstell-Einrichtungen unabhängig voneinander betätigbar. Hierdurch lässt sich der Anstellwinkel der Luftleiteinrichtung unabhängig von der Ausstellhöhe derselben regulieren.

Eine stufenlose Arretierbarkeit in beliebigen Zwischenstellungen verbessert die Flexibilität der Verstell-Vorrichtung. Hierdurch kann die Stellung der Luftleiteinrichtung optimal an die Erfordernisse und Umstände angepasst werden.

Die Ausbildung der Verstell-Einrichtungen mit einem Spindelaktor ist sehr robust und ermöglicht darüber hinaus eine präzise und zuverlässige Verstellbarkeit der Luftleiteinrichtung.

Eine integrierte Bauweise verbessert die Aerodynamik und das optische Erscheindungsbild der Verstell-Vorrichtung.

Eine zentral angeordnete Antriebs-Einheit stellt eine synchrone Verstellung der seitlich angeordneten Linear-Verstell-Einrichtungen sicher.

Eine doppelte Lagerung der Spindel der Verstell-Einrichtungen verbessert deren Robustheit und Präzision.

Eine Kinematik ermöglicht eine einfache Umwandlung einer Linearbewegung in eine Kippbewegung. Hierbei ist eine Mehrgelenks-Kinematik und/oder ein Exzenter besonders vorteilhaft. Weitere Vorteile der Erfindung sowie Merkmale und Einzelheiten derselben ergeben sich aus der Beschreibung mehrerer Ausführungsbeispiele anhand der Zeichnungen. Es zeigen:
- Fig. 1: eine schematische Teilansicht einer Luftleiteinrichtung mit einer Verstell-Vorrichtung gemäß einem ersten Ausführungsbeispiel,
- Fig. 2: eine Schnitt-Darstellung entlang der Linie II-II des Ausführungsbeispiels gemäß Figur 1,
- Fig. 3: eine Darstellung gemäß Figur 2 mit ausgestellter Luftleiteinrichtung,
- Fig. 4: eine Darstellung gemäß Figur 3 mit verschwenkter Luftleiteinrichtung,
- Fig. 5: eine Seitansicht des Ausführungsbeispiels gemäß Figur 1,
- Fig. 6: eine Darstellung gemäß Figur 2 eines zweiten Ausführungsbeispiels der Erfindung,
- Fig. 7: eine Darstellung des Ausführungsbeispiels gemäß Figur 6 mit angestellter Luftleiteinrichtung
- Fig. 8: eine Darstellung des Ausführungsbeispiels gemäß Figur 6 mit ausgestellter Luftleiteinrichtung,
- Fig. 9: eine Darstellung gemäß Figur 2 eines dritten Ausführungsbeispiels der Erfindung,
- Fig. 10: eine Darstellung des Ausführungsbeispiels gemäß Figur 9 mit ausgestellter und angestellter Luftleiteinrichtung,
- Fig. 11: eine Schnitt-Darstellung eines vierten Ausführungsbeispiels der Erfindung,
- Fig. 12: eine weitere Schnitt-Darstellung des vierten Ausführungsbeispiels der Erfindung,
- Fig. 13: eine Darstellung gemäß Figur 11 mit angestellter Luftleiteinrichtung,
- Fig. 14: eine Darstellung gemäß Figur 12 mit angestellter Luftleiteinrichtung,
- Fig. 15: eine schematische Ansicht des vierten Ausführungsbeispiels von oben und
- Fig. 16: eine Schnitt-Darstellung eines fünften Ausführungsbeispiels der Erfindung.

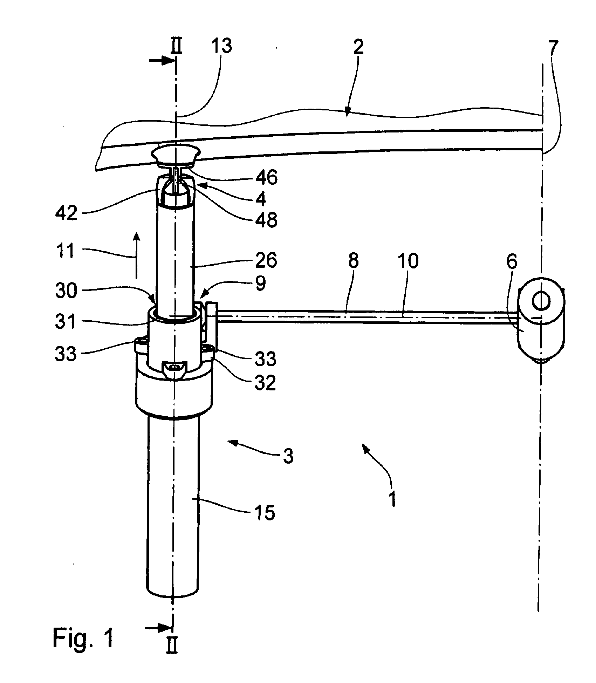

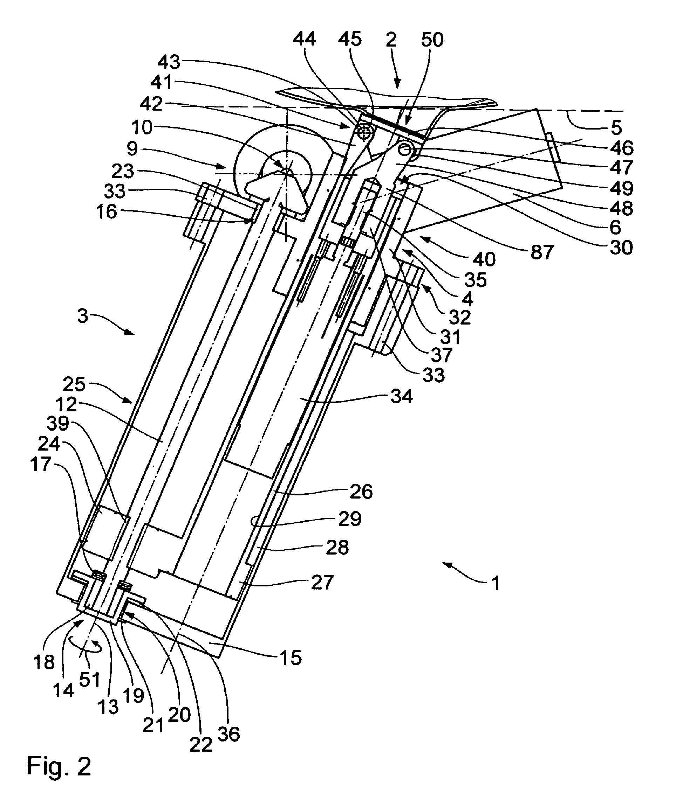

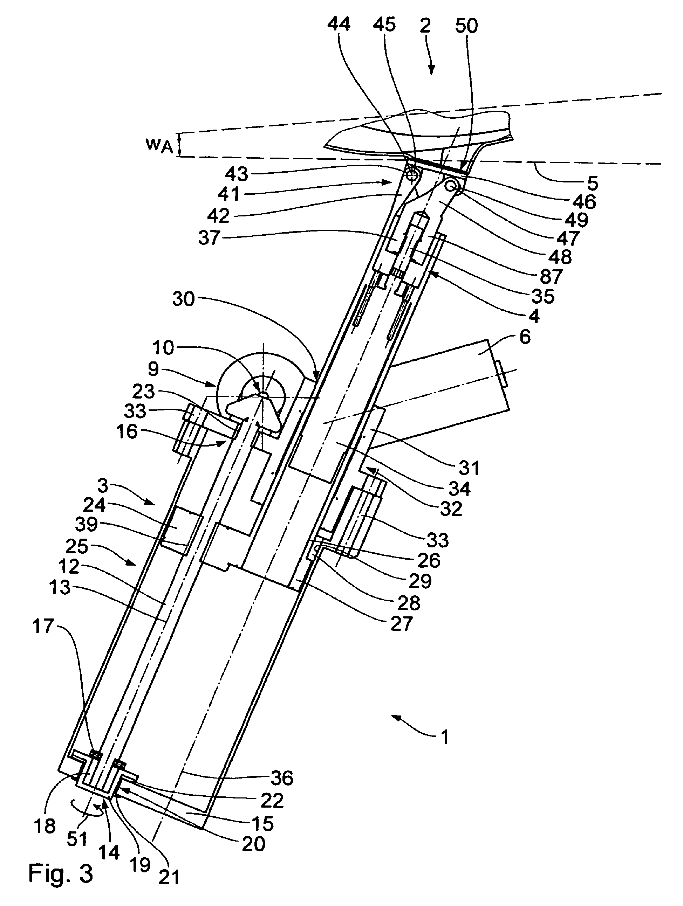

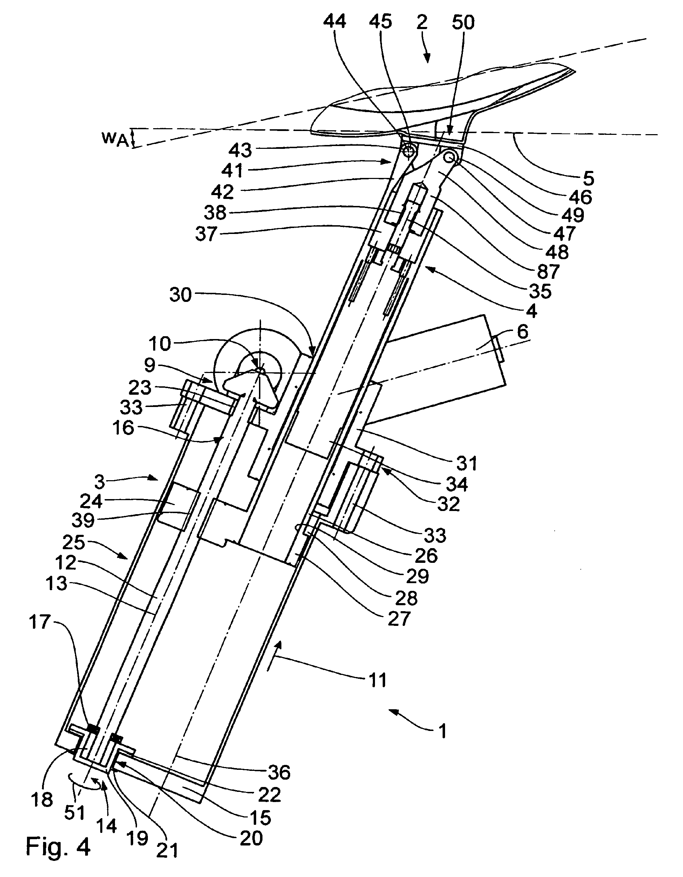

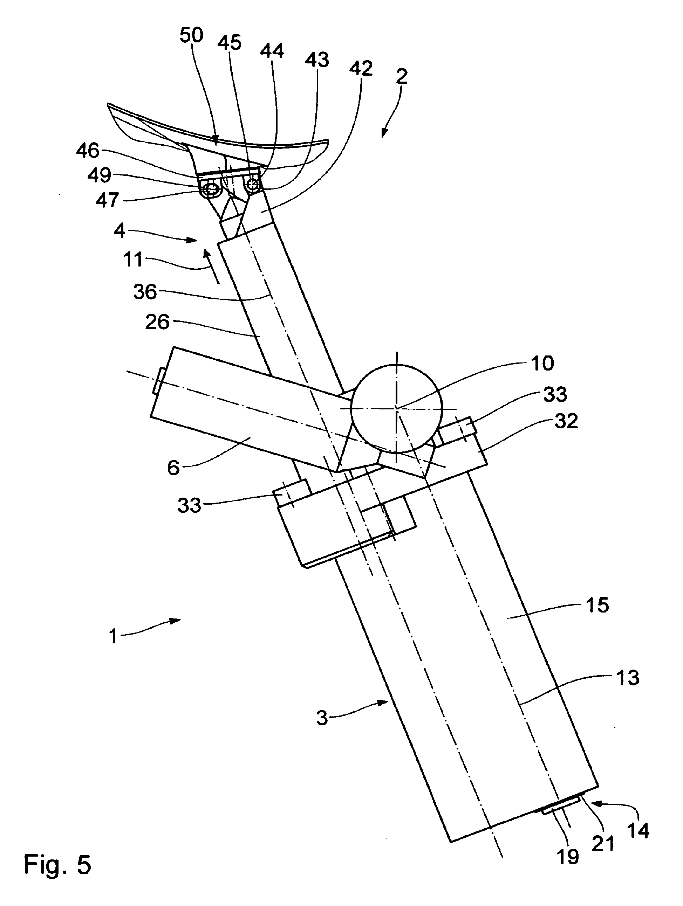

Im Folgenden wird unter Bezugnahme auf die Figuren 1 bis 5 ein erstes Ausführungsbeispiel der Erfindung beschrieben. Eine Vorrichtung 1 zur Verstellung einer Luftleiteinrichtung 2 an einem Kraftfahrzeug umfasst zwei, symmetrisch zu einer Mittel-Längs-Ebene 7 des Kraftfahrzeugs angeordnete Ausstell-Einrichtungen 3 und Anstell-Einrichtungen 4. Die Ausstell-Einrichtungen 3 bilden eine Linear-Verstell-Einrichtung und dienen der Verstellung der linearen Ausstellung der Luftleiteinrichtung 2 entlang einer Ausstell-Richtung 11. Die Anstell-Einrichtungen 4 bilden eine Winkel-Verstell-Einrichtung und dienen der Verstellung eines Anstellwinkels w_{A} der Luftleiteinrichtung 2. Mit dem Anstellwinkel w_{A} ist der Winkel der Luftleiteinrichtung 2 zu einer Horizontalebene 5 bezeichnet. Der genaue numerische Wert des Anstellwinkels w_{A} ist im Folgenden unerheblich. Es kommt somit nicht darauf an, wo oder wie dieser Wert bei der erfindungsgemäßen Luftleiteinrichtung 2 gemessen wird.

Die Vorrichtung 1 umfasst eine zentral zwischen den die Linear-Verstell-Einrichtung bildenden Ausstell-Einrichtungen 3 angeordnete, als Elektromotor 6 ausgebildete Antriebs-Einheit. Der Elektromotor 6 ist über eine Antriebs-Welle 8 an die Ausstell-Einrichtungen 3 gekoppelt. Die Antriebs-Welle 8 ist um eine Antriebs-Wellen-Achse 10, welche senkrecht zur Mittel-Längs-Ebene 7 angeordnet ist, drehbar gelagert. Die Antriebs-Welle 8 ist vorzugsweise starr ausgebildet. Hierdurch wird die Kraftübertragung vom Elektromotor 6 auf die Ausstell-Einrichtungen 3 verbessert. Zur Gewichtsersparnis kann die Antriebs-Welle 8 als Hohlwelle ausgebildet sein. Eine massive Ausbildung ist jedoch ebenso möglich. Die Antriebs-Welle 8 ist über ein Getriebe 9 an die Ausstell-Einrichtung 3 gekoppelt. Das Getriebe 9 ist vorzugsweise als Schneckengetriebe oder Kegelradgetriebe ausgebildet.

Die Ausstell-Einrichtungen 3 sind derart angeordnet, dass die Luftleiteinrichtung 2 mit ihrer Hilfe entlang einer Ausstell-Richtung 11 verstellbar ist. Die Ausstell-Richtung 11 steht senkrecht zur Antriebs-Wellen-Achse 10.

Mittels des Getriebes 9 ist ein vom Elektromotor 6 erzeugtes Drehmoment über die Antriebs-Welle 8 auf eine Spindel 12 der Ausstell-Einrichtung 3 übertragbar. Die Spindel 12 ist entlang einer Spindelachse 13 parallel zur Ausstell-Richtung 11 ausgerichtet.

Das Getriebe 9 ist vorzugsweise selbsthemmend ausgebildet. Es ist insbesondere als Untersetzungsgetriebe mit einer Untersetzung im Bereich von 1 zu 10 bis 1 zu 200, vorzugsweise im Bereich von 1 zu 50 bis 1 zu 100 ausgebildet.

Die Spindel 12 ist an ihrem dem Getriebe 9 entgegengesetzten Ende mittels einer ersten Lagerung 14 in einem Gehäuse 15 der Ausstell-Einrichtung 3 gelagert. Die Spindel 12 ist außerdem im Bereich ihres der ersten Lagerung 14 entgegengesetzten Endes mittels einer zweiten Lagerung 16 im Gehäuse 15 gelagert. Durch diese doppelte Lagerung ist die Spindel 12 besonders stabil im Gehäuse 15 angeordnet.

Die erste Lagerung 14 umfasst ein Axiallager 17, einen Freilauf 18, einen Mitnehmer 19, welcher in einer Lagerbuchse 20 mit einem Bund 21 angeordnet ist, und einer Bremsscheibe 22.

Die zweite Lagerung 16 umfasst insbesondere ein Radiallager.

Auf der Spindel 12 ist eine Spindelmutter 24 angeordnet. Die Spindelmutter 24 weist ein zur Spindel 12 passendes Innengewinde 39 auf. Sie ist drehfest im Gehäuse 15 gelagert. Die Spindelmutter 24 ist somit durch Verdrehung der Spindel 12 in Richtung der Spindel-Achse 13 verschiebbar im Gehäuse 15 gelagert. Die Spindel 12 und die Spindelmutter 24 bilden einen ersten Spindeltrieb, den Ausstell-Spindeltrieb 25.

Der Ausstell-Spindeltrieb 25 ist in stufenlosen Zwischenstellungen arretierbar. Eine Arretierung des Ausstell-Spindeltriebs 25 kann von der Bremsscheibe 22 in der ersten Lagerung 14 der Spindel 12 unterstützt werden. Die Ausstell-Einrichtung 3 ist somit gegen ein unbeabsichtigtes Verstellen zuverlässig gesichert. Sie ist stufenlos einstellbar, dass heißt sie ermöglicht eine stufenlose Einstellung der Ausstellhöhe der Luftleiteinrichtung 2.

Die Spindelmutter 24 ist fest mit einem Tauchrohr 26 verbunden. Das Tauchrohr 26 ist beispielsweise mit der Spindelmutter 24 verklebt oder verschweißt. Das Tauchrohr 26 kann auch einteilig mit der Spindelmutter 24 ausgebildet sein. Das Tauchrohr 26 ist verdrehgesichert im Gehäuse 15 gelagert. Es weist hierzu radial vorstehende Fortsätze 27 auf, welche in sich in Richtung parallel zur Spindel-Achse 13 erstreckende Führungsnuten 28 in einer Innenwand 29 des Gehäuses 15 eingreifen. Das Tauchrohr 26 kann jedoch auch verdrehbar im Gehäuse 15 gelagert sein. Dies ist insbesondere bei der Montage der Luftleiteinrichtung 2 an der Verstell-Vorrichtung 1 von Vorteil. Das Tauchrohr 26 ist formstabil. Es ist vorzugsweise aus Metall.

Das Tauchrohr 26 ist durch ein Verschieben der Spindelmutter 24 entlang der Spindel-Achse 13 zusammen mit dieser parallel zur Ausstell-Richtung 11 verschiebbar. Es ist aus dem Gehäuse 15 herausführbar. Das Gehäuse 15 weist hierfür eine Ausführ-Öffnung 30 auf. Im Bereich der Ausführ-Öffnung 30 ist das Tauchrohr 26 mittels einer Tauchrohr-Lagerung 31 im Gehäuse 15 gelagert.

Die Tauchrohr-Lagerung 31 ist ebenso wie die zweite Lagerung 16 der Spindel 12 vorzugsweise in einem vom Gehäuse 15 abnehmbaren Deckel 32 desselben angeordnet. Der Deckel 32 ist Teil des Gehäuses 15. Er ist fest mit diesem verbunden, insbesondere mittels Deckel-Schrauben 33 mit diesem verschraubt. Hierdurch ist der Deckel 32 vom Gehäuse 15 abnehmbar. Dies ermöglicht einen einfachen Zusammenbau sowie eine besonders einfache Inspektion und Wartung der Verstell-Vorrichtung 1.

Im Folgenden werden die Anstell-Einrichtungen 4 näher beschrieben. Die Anstell-Einrichtungen 4 umfassen jeweils einen Anstell-Motor 34, welcher eine Antriebs-Einrichtung für die Anstell-Einrichtung 4 bildet. Als Anstell-Motor 34 ist vorzugweise ein Elektromotor vorgesehen. Der Anstell-Motor 34 ist drehfest im Tauchrohr 26 der Ausstell-Einrichtung 3 angeordnet. Der Anstell-Motor 34 ist außerdem in Richtung parallel zur Spindel-Achse 13 fest mit dem Tauchrohr 26 verbunden. Der Anstell-Motor 34 ist somit in der Ausstell-Einrichtung 3 integriert.

Der Anstell-Motor 34 ist über ein Spiralkabel 82 mit einer nur schematisch dargestellten Steuer-Einrichtung 83 mit einer Energie-Versorgungs-Einheit verbunden. Hierzu ist das Spiralkabel 82 durch eine Kabeldurchführ-Öffnung 84 im Boden 85 des Gehäuses 15 hindurchgeführt. Prinzipiell kann die Steuer-Einrichtung 83 und/oder die Energie-Versorgungs-Einheit auch im Gehäuse 15 angeordnet sein. Das Spiralkabel 82 dient außerdem der daten- und/oder energieübertragenden Verbindung eines Kodierers zur Steuerung des Anstell-Motors 34 mit der Steuer-Einrichtung 83. Der Kodierer ist als rotatorischer oder linearer Kodierer ausgebildet. Er umfasst vorzugsweise einen Hallsensor.

Des Weiteren umfasst die Anstell-Einrichtung 4 eine Anstell-Spindel 35. Die Anstell-Spindel 35 ist um eine Anstell-Spindel-Achse 36 drehbar, insbesondere drehantreibbar gelagert. Sie ist hierzu in drehmomentübertragender Weise an den Anstell-Motor 34 gekoppelt. Die Anstell-Spindel-Achse 36 verläuft parallel zur Spindel-Achse 13.

Auf der Anstell-Spindel 35 ist eine Anstell-Spindel-Mutter 37 angeordnet. Die Anstell-Spindel-Mutter 37 weist ein zur Anstell-Spindel 35 passendes Innengewinde 38 auf. Die Anstell-Spindel-Mutter 37 ist somit durch Verdrehen der Anstell-Spindel 35 in Richtung parallel zur Anstell-Spindel-Achse 36 verschiebbar.

Die Anstell-Spindel-Mutter 37 ist fest mit einem Anbindungs-Element 87 verbunden. Sie kann auch einteilig mit dem Anbindungs-Element 87 ausgebildet sein. Im Folgenden werden die Anstell-Spindel-Mutter 37 und das Anbindungs-Element 87 zusammen als Anstell-Spindel-Mutter 37 bezeichnet.

Die Anstell-Spindel 35 bildet zusammen mit der Anstell-Spindel-Mutter 37 einen zweiten Spindeltrieb, den Anstell-Spindeltrieb 40. Der Anstell-Spindeltrieb 40 ist zusammen mit dem Tauchrohr 26 vom Ausstell-Spindeltrieb 25 in Richtung parallel zur Anstell-Spindel-Achse 36, das heißt parallel zur Ausstell-Richtung 11 verschiebbar. DerAnstell-Spindeltrieb 40 ist in stufenlosen Zwischenstellungen arretierbar. Somit ist der Anstellwinkel w_{A} der Luftleiteinrichtung 2 stufenlos einstellbar.

Die Anstell-Einrichtung 4 und die Ausstell-Einrichtung 3 sind unabhängig voneinander betätigbar.

Zur Anbindung der Luftleiteinrichtung 2 an die Verstell-Vorrichtung 1 ist am Tauchrohr 26 ein erstes Befestigungs-Element 41 vorgesehen. Das erste Befestigungs-Element 41 ist als Verlängerung 42 des Tauchrohrs 26 ausgebildet. In der Verlängerung 42 ist eine Bohrung 43 vorgesehen, welche senkrecht zur Anstell-Spindel-Achse 36 ausgerichtet ist. Durch die Bohrung 43 ist eine Anstell-Schwenk-Achse 44 definiert, um welche die Luftleiteinrichtung 2 mittels der Anstell-Einrichtung 4 verschwenkbar ist. Hierfür ist in der Bohrung 43 ein Schwenk-Zapfen 45 um die Anstell-Schwenk-Achse 44 verschwenkbar gelagert. Die Anstell-Schwenk-Achse 44 bildet ein Festlager. Der Schwenk-Zapfen 45 ist fest mit einem Befestigungs-Element 46 der Luftleiteinrichtung 2 verbunden. Er kann vorzugsweise einteilig mit dem Befestigungs-Element 46 ausgebildet sein. Das Befestigungs-Element 46 ist seinerseits fest mit der Luftleiteinrichtung 2 verbunden, insbesondere verschraubt oder verschweißt. Es kann ebenfalls einteilig mit der Luftleiteinrichtung 2 ausgebildet sein.

Es ist selbstverständlich ebenso gut möglich, den Schwenk-Zapfen 45 fest an der Verlängerung 42 des Tauchrohrs 26 anzuordnen und das Befestigungs-Element 46 mit der Bohrung 43 zur Aufnahme des Schwenk-Zapfens 45 zu versehen. Eine entsprechende Verbindung ist vorzugsweise zur zweiten Anbindung der Luftleiteinrichtung 2 an die Anstell-Einrichtung 4 vorgesehen. Hierzu ist ein Anstell-Zapfen 47 fest mit einer Verlängerung 48 der Anstell-Spindel-Mutter 37 verbunden. Der Anstell-Zapfen 47 ist durch in einer als Langloch 49 ausgebildeten Anbindungs-Öffnung des Befestigungs-Elements 46 hindurchgeführt. Das Langloch 49 ist gerade so dimensioniert, dass der Anstell-Zapfen 47 senkrecht zur Längsausrichtung spielfrei im Langloch 49 verschiebbar geführt ist. Hierdurch werden unerwünschte Klappergeräusche aufgrund von Vibrationen der Luftleiteinrichtung 2 vermieden. Das Langloch 49 bildet ein Loslager.

Der Anstell-Spindeltrieb 40 ist vorzugsweise selbsthemmend ausgebildet. Für ein besonders präzises Zusammenspiel der Anstell-Einrichtung 4 und des Befestigungs-Elements 46 können die Anstell-Spindel-Mutter 37 mit der Verlängerung 48 und dem Anstell-Zapfen 47 und/oder das Befestigungs-Element 46 mit dem Langloch 49 als CNC-gefräste Bauteile ausgebildet sein.

Durch das Langloch 49 ist eine Veränderung des Abstands zwischen der Anstell-Schwenk-Achse 44 und dem Anstell-Zapfen 47 bei einer Verschiebung der Anstell-Spindel-Mutter 37 in Richtung der Anstell-Spindel-Achse 36 mittels der Anstell-Spindel 35 ausgleichbar. Es bildet somit eine Ausgleichs-Einrichtung.

Die Anbindung der Luftleitereinrichtung 2 an die Anstell-Einrichtung 4 mittels des in der Bohrung 43 gelagerten Schwenk-Zapfens 45 und des im Langloch 49 gelagerten Anstell-Zapfens 47 bildet eine Anstell-Kinematik 50, mittels welcher eine vom Anstell-Spindeltrieb 40 bewirkte Linearbewegung der Anstell-Spindel-Mutter 37 in Richtung parallel zur Anstell-Spindel-Achse 36 in eine Schwenkbewegung der Luftleiteinrichtung 2 um die Anstell-Schwenk-Achse 44 umwandelbar ist.

Die Einstellung des Anstellwinkels w_{A} und/oder der Ausstellhöhe der Luftleiteinrichtung 2 ist mittels der Steuer-Einrichtung 83 steuerbar. Diese kann vorzugsweise aus Eingaben, beispielsweise mittels Sensoren, über die Umweltbedingungen sowie insbesondere über die Geschwindigkeit des Kraftfahrzeugs die optimale Einstellung der Luftleiteinrichtung 2 bestimmen und durch Ansteuern der Motoren 6, 34 einstellen. Hierbei können selbstverständlich individuelle Anpassungen durch den Benutzer ermöglicht sein.

Im Folgenden wird die Funktionsweise der Verstell-Vorrichtung 1 beschrieben. Zur Verstellung der Ausstellhöhe wird mittels des Elektromotors 6 über die Antriebs-Welle 8 und das Getriebe 9 die Spindel 12 des Ausstell-Spindeltriebs 25 betätigt, das heißt um ihre Spindel-Achse 13 gedreht. Hierbei wird die Drehzahl der Antriebs-Welle 8 vom Getriebe 9 untersetzt. Die resultierende Drehzahl der Spindel 12 ist vorzugsweise kleiner als 1000/min. Hierdurch ist eine besonders präzise und geräuscharme Verstellung der Ausstellhöhe der Luftleiteinrichtung 2 möglich. Eine selbsthemmende Ausbildung des Getriebes 9 begünstigt die stufenlose Verstellbarkeit der Ausstellhöhe der Luftleiteinrichtung 2 mittels der Ausstell-Einrichtung 3. Durch ein Verdrehen der Spindel 12 wird die Spindelmutter 24 in Richtung parallel zur Spindel-Achse 13 auf der Spindel 12 verschoben. Während eine Drehung der Spindel in eine erste Drehrichtung 51 zu einer Verschiebung der Spindelmutter 24 in Ausstell-Richtung 11 führt, bewirkt eine Drehung der Spindel 12 in entgegengesetzter Richtung eine Verschiebung der Spindelmutter 24 gegen die Ausstell-Richtung 11. Die Luftleiteinrichtung 2 ist somit mittels der Ausstell-Einrichtungen 3 sowohl ausstellbar als auch einfahrbar.

Durch die Verschiebung der Spindelmutter 24 wird auch das mit dieser verbundene Tauchrohr 26 und somit die daran mittels des Befestigungs-Elements 46 angebundende Luftleiteinrichtung 2 in Richtung parallel zur Ausstell-Richtung 11 verschoben. Eine derartige Verstellung der Luftleiteinrichtung 2 parallel zur Ausstell-Richtung 11 mittels der Ausstell-Einrichtung 3 ist unabhängig von einer Verstellung des Anstellwinkels w_{A} mittels der Anstell-Einrichtung 4.

Zum Verstellen des Anstellwinkels w_{A} der Luftleiteinrichtung 2 wird der Anstell-Motor 34 zum Antrieb des Anstell-Spindeltriebs 40 betätigt. Hierdurch wird die Anstell-Spindel 35 um die Anstell-Spindel-Achse 36 gedreht, was zu einer Verschiebung der Anstell-Spindel-Mutter 37 in Richtung parallel zur Anstell-Spindel-Achse 36 führt. Eine Verschiebung der Anstell-Spindel-Mutter 37 in Richtung parallel zur Anstell-Spindel-Achse 36 führt zu einer Verschwenkung der Luftleiteinrichtung 2 um die Anstell-Schwenk-Achse 44, welche ortsfest in Bezug auf das Tauchrohr 26 und somit auf die im Tauchrohr 26 angeordnete Anstell-Spindel 35 der Anstell-Einrichtung 4 ist. Je nach Drehrichtung der Anstell-Spindel 35 wird der Anstell-Winkel w_{A} hierdurch vergrößert oder verkleinert.

Bei einer Verstellung des Anstellwinkels w_{A} der Luftleiteinrichtung 2 mittels der Anstell-Einrichtung 4 durch eine Verschiebung der Anstell-Spindel-Mutter 37 auf der Anstell-Spindel 35 wird eine dadurch bewirkte Veränderung des Abstands zwischen dem mit der Anstell-Spindel-Mutter 37 fest verbundenen Anstell-Zapfen 47 und der Anstell-Schwenk-Achse 44 durch eine Bewegung des Anstell-Zapfens 47 im Langloch 49 des Befestigungs-Elements 46 ausgeglichen.

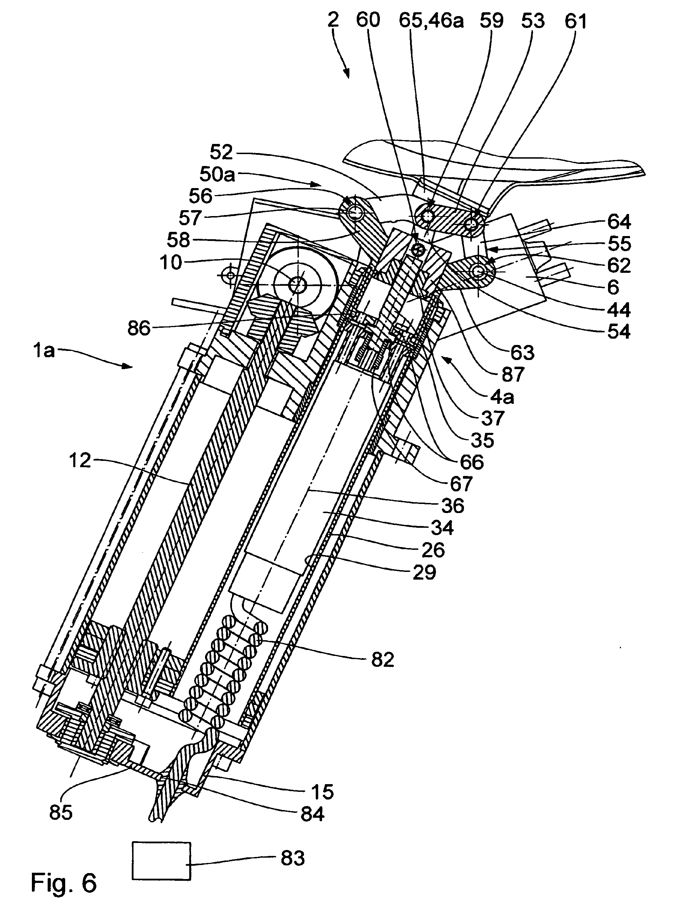

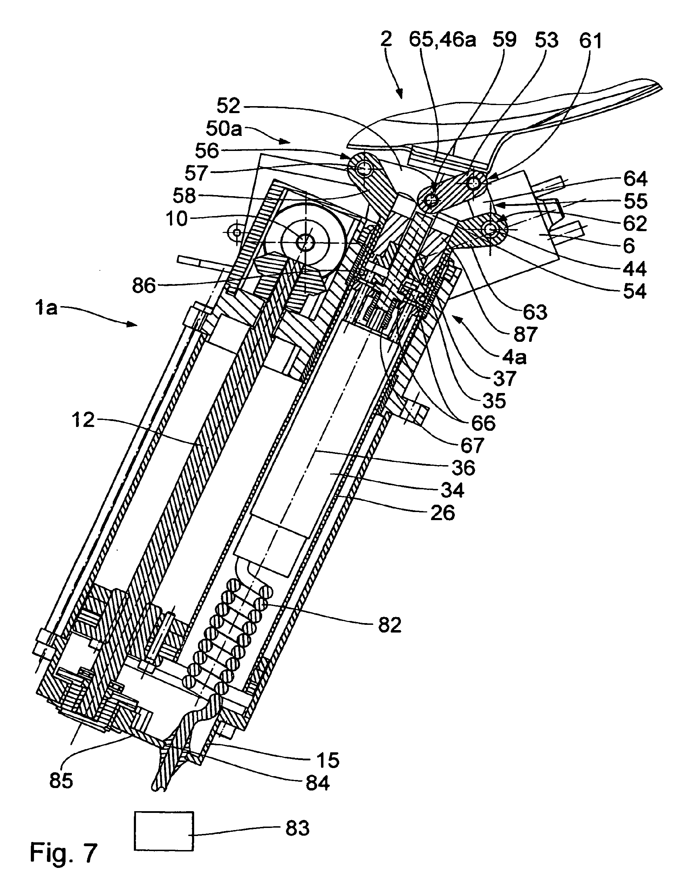

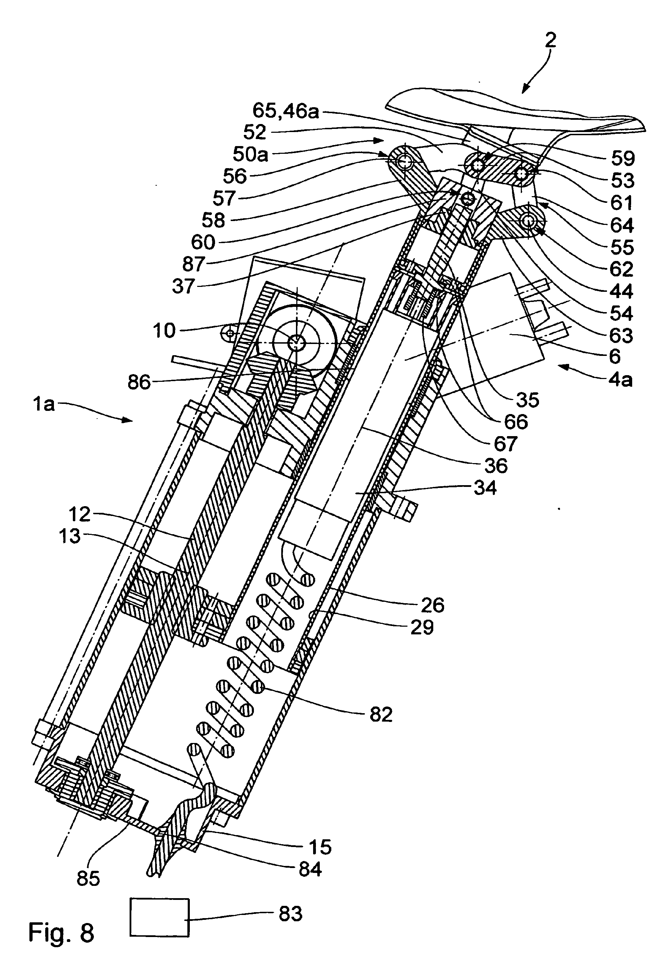

Im Folgenden wird unter Bezugnahme auf die Figuren 6 bis 8 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Funktionell gleichartige, jedoch konstruktiv unterschiedliche Teile erhalten dieselben Bezugszeichen mit einem nachgestellten a. Der Unterschied zum ersten Ausführungsbeispiel besteht in der Ausbildung der Anstell-Kinematik 50a, mittels welcher die Luftleiteinrichtung 2 an die Anstell-Einrichtungen 4a angebunden ist. Die Anstell-Kinematik 50a ist als Vielhebel-Kinematik, insbesondere als Vier-Hebel-Kinematik ausgebildet. Die Ausbildung der Anstell-Kinematik 50a wird auch als Mehrgelenk-Kinematik, insbesondere als Fünf-Gelenk-Kinematik bezeichnet.

Die Anstell-Kinematik 50a umfasst einen ersten und einen zweiten Kinematik-Hebel 52, 53, einen Antriebs-Hebel 54 und einen Anbindungs-Hebel 55. Der erste Kinematik-Hebel 52 ist mittels einer ersten Lagerung 56 um eine senkrecht zur Anstell-Spindel-Achse 36 verlaufende erste Schwenkachse 57 verschwenkbar mit einem Fortsatz 58 verbunden. Der Fortsatz 58 ist fest mit dem Tauchrohr 26 verbunden. Er ist vorzugsweise einteilig mit dem Tauchrohr 26 ausgebildet. Er kann jedoch auch mit dem Tauchrohr 26 verschraubt, verklebt oder verschweißt sein. Der erste Kinematik-Hebel 52 ist abgewinkelt oder gebogen ausgeführt. An seinem der ersten Lagerung 56 entgegengesetzten Ende ist der erste Kinematik-Hebel 52 mittels einer zweiten Lagerung 59 mit dem zweiten Kinematik-Hebel 53 und dem Antriebs-Hebel 54 verbunden. Der Antriebs-Hebel 54 ist außerdem mittels einer dritten Lagerung 60 an die Anstell-Spindel-Mutter 37 gekoppelt. Der zweite Kinematik-Hebel 53 ist an seinem der zweiten Lagerung 59 entgegengesetztem Ende mittels einer vierten Lagerung 61 mit dem Anbindungs-Hebel 55 verbunden. Letzterer ist schließlich mittels einer fünften Lagerung 62 mit einem weiteren Fortsatz 63 verbunden. Der Fortsatz 63 ist vorzugsweise einteilig mit dem Fortsatz 58 ausgebildet. Die Lagerungen 56, 59, 60, 61 und 62 definieren jeweils Schwenk-Lager, welche eine Verschwenkbarkeit der jeweiligen Hebel um Achsen parallel zur ersten Schwenkachse 57 ermöglichen. Die vier Hebel 52, 53, 54 und 55 sind insbesondere mittels der fünf Lagerungen 56, 59, 60, 61, 62 um parallel zueinander verlaufende Schwenkachsen verschwenkbar miteinander verbunden. Die erste und die fünfte Lagerung 56, 62 bilden hierbei jeweils ein Festlager, welches fest mit dem Tauchrohr 26 verbunden ist.

Die zweite, dritte und vierte Lagerung 59, 60 und 61 bilden jeweils ein Loslager.

Die Anstell-Kinematik 50a bildet durch die Mehr-Hebel-Verbindungen zwischen der Anstell-Spindel-Mutter 37 und den beiden Festlagern 56, 62 eine Ausgleichs-Einrichtung zum Ausgleich einer Abstandsänderung zwischen der Anstell-Spindel-Mutter 37 und den beiden Festlagern 56, 62, welche bei einer Verschiebung der Anstell-Spindel-Mutter 37 auf der Anstell-Spindel 35 notwendiger Weise auftritt.

Der Anbindungs-Hebel 55 ist abgewinkelt ausgebildet. Er kann auch gebogen ausgebildet sein. Er ist um die fünfte Lagerung 62 verschwenkbar, welche die Anstell-Schwenk-Achse 44 bildet. Der Anbindungs-Hebel 55 umfasst einen ersten Teil-Schenkel 64 und einen zweiten Teil-Schenkel 65. Die Teil-Schenkel 64, 65 sind einteilig miteinander ausgebildet. Der erste Teil-Schenkel 64 verbindet die fünfte Lagerung 62 und die vierte Lagerung 61. Der zweite Teil-Schenkel 65 bildet das Befestigungs-Element 46a und dient der Anbindung an die Luftleiteinrichtung 2. Er ist fest mit der Luftleiteinrichtung 2 verbunden, vorzugsweise verschraubt.

In einer besonders vorteilhaften Ausführungsform ist die Anstell-Kinematik 50a als austauschbares Modul ausgebildet. Sie ist zum Einbau auf einfache Weise mit dem Tauchrohr 26 verbindbar. Sie wird hierzu in das der Luftleiteinrichtung 2 zugewandte Ende des Tauchrohrs 26 eingesetzt und mit diesem verbunden, beispielsweise verklebt oder verschweißt, vorzugsweise verschraubt. Sie ist hierbei durch einen O-Ring 86 gegen die Innenwand 29 des Tauchrohrs 26 abgedichtet.

Die Anstell-Spindel 35 ist in einem Anstell-Spindel-Lager 66 gelagert. Das Anstell-Spindel-Lager 66 ist insbesondere als Axiallager ausgebildet. Ein Radiallager ist jedoch ebenso möglich. Zur Anbindung der Anstell-Spindel 35 an den Anstell-Motor 34 ist eine Kupplung 67 vorgesehen. Die Kupplung 67 ist hülsenförmig ausgebildet. Sie ist vorzugsweise blockierbar und ermöglicht somit eine stufenlose Arretierung der Anstell-Einrichtung 4a.

Zum Verstellen des Anstellwinkels w_{A} ist der Antriebs-Hebel 54 vorgesehen. Der Antriebs-Hebel 54 ist einerseits über die zweite Lagerung 59 mit den Kinematik-Hebeln 52 und 53, andererseits über die dritten Lagerung 60 mit der Anstell-Spindel-Mutter 37 verbunden. Die Verstellung des Anstellwinkels w_{A} der Luftleiteinrichtung 2 erfolgt auch bei diesem Ausführungsbeispiel durch eine Verdrehung der Anstell-Spindel 35 um die Anstell-Spindel-Achse 36, wodurch die mit dem Antriebs-Hebel 54 verbundene Anstell-Spindel-Mutter 37 auf der Anstell-Spindel 35 verschoben wird. Der Antriebs-Hebel 54 ist somit durch Betätigen des Anstell-Motors 34 der Anstell-Einrichtung 4a verschiebbar. Hierbei ist die zweite Lagerung 59 durch eine Totpunktstellung auf der Verbindungslinie zwischen der ersten Lagerung 56 und der vierten Lagerung 61 hindurchführbar. Somit befindet sich die Luftleiteinrichtung 2 in den beiden einander entgegengesetzten Endstellungen der Anstell-Spindel-Mutter 37 auf der Anstell-Spindel 35 der Anstell-Einrichtung 4a in dynamisch stabilen Positionen. Dies bedeutet insbesondere, dass die von der Luftleiteinrichtung 2 im normalen Betrieb auf die Kinematik 50a ausgeübte Kraft einer Auslenkung der Luftleiteinrichtung 2 aus der Endstellung gerade entgegenwirkt. Ein unbeabsichtigtes, unerwünschtes Verstellen der Luftleiteinrichtung 2 aus diesen Endstellungen wird somit selbsttätig, zuverlässig vermieden.

Die Totpunktstellung der zweiten Lagerung 59 befindet sich in der Nähe der Stellung, welche einer maximal ausgefahrenen Stellung der Anstell-Spindel-Mutter 37 entspricht. Sie ist insbesondere durch weniger als zwei Umdrehungen der Anstell-Spindel 35 ausgehend von der ausgefahrenen Endstellung der Anstell-Spindel-Mutter 37 erreichbar.

Die Anbindung der Luftleiteinrichtung 2 an die Anstell-Einrichtung 4a über die drei voneinander beabstandeten Lagerungen 56, 60, 62 ist besonders stabil und führt zu einer sicheren Befestigung der Luftleiteinrichtung 2 am Kraftfahrzeug. Die Stabilität der Vorrichtung 1a wird durch die Ausbildung der Anstell-Kinematik 50a als Mehrgelenk-Kinematik mit Totpunktstellungen weiter verbessert.

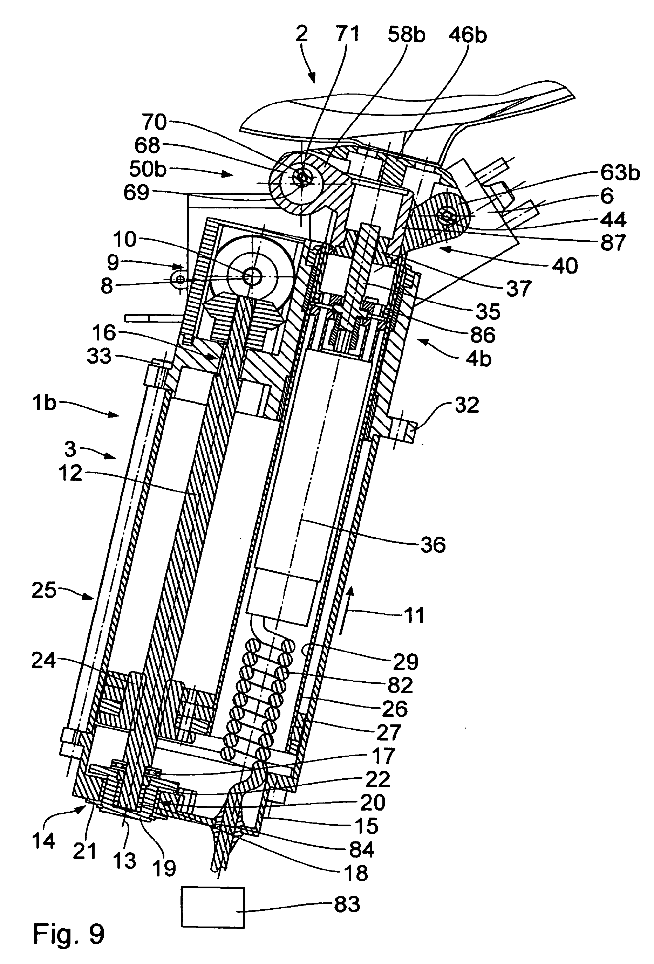

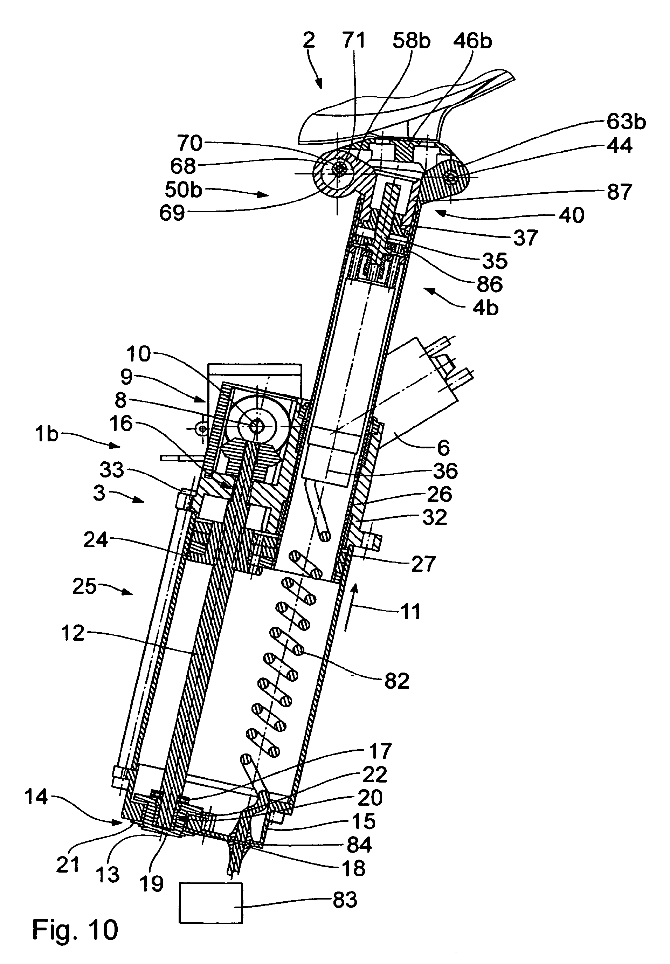

Im Folgenden wird unter Bezugnahme auf die Figuren 9 bis 10 ein drittes Ausführungsbeispiel der Erfindung beschrieben. Identische Teile erhalten dieselben Bezugszeichen wie bei den vorhergehenden Ausführungsbeispielen, auf deren Beschreibung hiermit verwiesen wird. Funktionell gleichartige, jedoch konstruktiv unterschiedliche Teile erhalten dieselben Bezugszeichen mit einem nachgestelltem b.

Beim dritten Ausführungsbeispiel weist die Anstell-Kinematik 50b als Ausgleichs-Einrichtung zum Ausgleich einer Abstandsänderung zwischen dem Loslager und der Anstell-Schwenk-Achse 44 bei einer Verstellung des Anstellwinkels w_{A} einen Exzenter 68 auf. Der Exzenter 68 ist als kreiszylinderförmiges Element mit einer Zylinder-Achse 69 ausgebildet. Die Zylinder-Achse 69 ist parallel zur Anstell-Schwenk-Achse 44 ausgerichtet. Außerdem umfasst der Exzenter 68 einen drehbar in diesem gelagerten Exzenter-Einsatz 70. Der Exzenter-Einsatz 70 ist vorzugsweise ebenfalls kreiszylinderförmig ausgebildet. Er ist um eine Exzenter-Einsatz-Achse 71 drehbar im Exzenter 68 gelagert. Die Exzenter-Einsatz-Achse 71 ist parallel zur Zylinderachse 69 ausgerichtet. Die Exzenter-Einsatz-Achse 71 ist beabstandet zur Zylinderachse 69 angeordnet. Somit ist der Abstand zwischen der Exzenter-Einsatz-Achse 71 und der Anstell-Schwenk-Achse 44 durch eine Rotation des Exzenters 68 um die Zylinderachse 69 veränderbar. Hierdurch kann eine Abstandsänderung zwischen der Zylinderachse 69 und der Anstell-Schwenk-Achse 44 bei einer Verschiebung der Anstell-Spindel-Mutter 37 auf der Anstell-Spindel 35 bei einer Verstellung des Anstellwinkels w_{A} kompensiert werden. Bei einer Verschiebung der Anstell-Spindel-Mutter 37 entlang der Anstell-Spindel-Achse 36 und einer dadurch bewirkten Verschiebung des zweiten Fortsatzes 63b parallel zur Anstell-Spindel-Achse 36 wird der Exzenter 68 gerade so um die Zylinderachse 69 verdreht, dass der Abstand zwischen der Exzenter-Einsatz-Achse 71 und der Anstell-Schwenk-Achse 44 konstant bleibt.

Während der zweite Fortsatz 63b wie beim zweiten Ausführungsbeispiel fest mit dem Tauchrohr 26 verbunden ist, ist der erste Fortsatz 58b beim dritten Ausführungsbeispiel fest mit der Anstell-Spindel-Mutter 37 verbunden. Der erste Fortsatz 58b ist somit zusammen mit der Anstell-Spindel-Mutter 37 durch eine Verdrehung der Anstell-Spindel 35 um die Anstell-Spindel-Achse 36 parallel zu letzterer verschiebbar.

Der Exzenter-Einsatz 70 dient der Anbindung des Anstell-Spindeltriebs 40 an die Luftleiteinrichtung 2. Er ist fest mit dem Befestigungselement 46b verbunden. Der Exzenter-Einsatz 70 ist vorzugsweise einteilig mit dem Befestigungselement 46b ausgebildet.

In einer besonders vorteilhaften Ausführungsform ist die Anstell-Kinematik 50b als austauschbares Modul ausgebildet. Sie ist zum Einbau auf einfache Weise mit dem Tauchrohr 26 verbindbar. Sie wird hierzu in das der Luftleiteinrichtung 2 zugewandte Ende des Tauchrohrs 26 eingesetzt und mit diesem verbunden, beispielsweise verklebt oder verschweißt, vorzugsweise verschraubt. Sie ist hierbei durch einen O-Ring 86 gegen die Innenwand 29 des Tauchrohrs 26 abgedichtet.

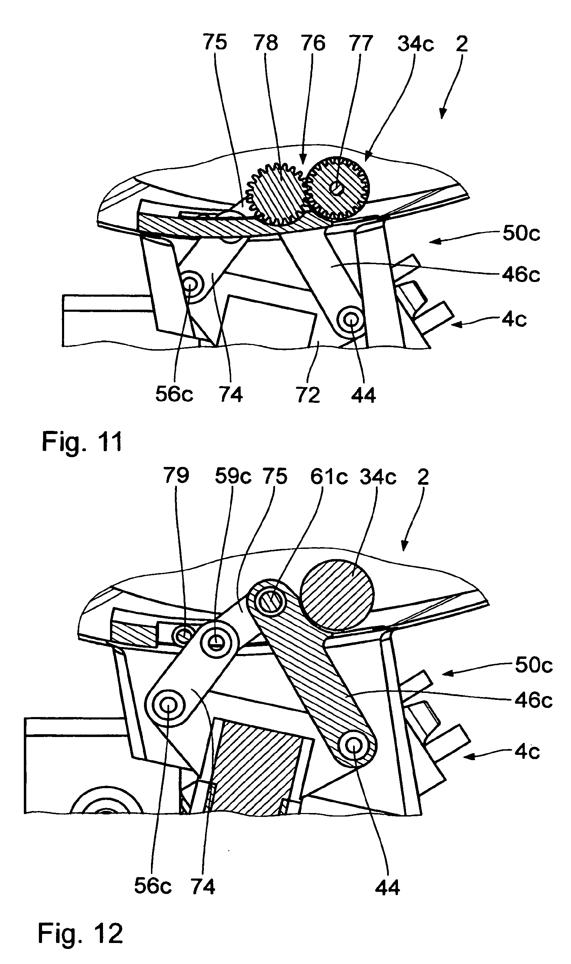

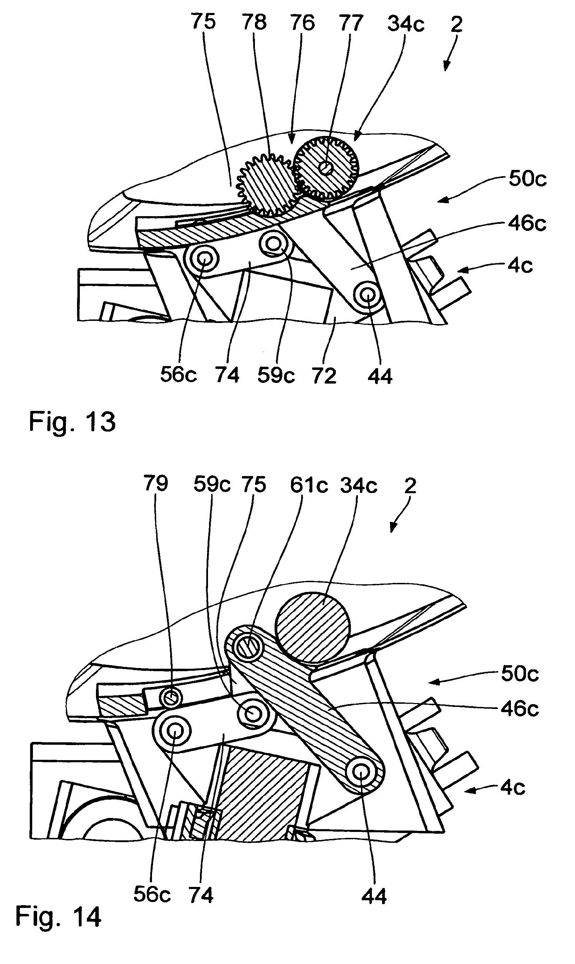

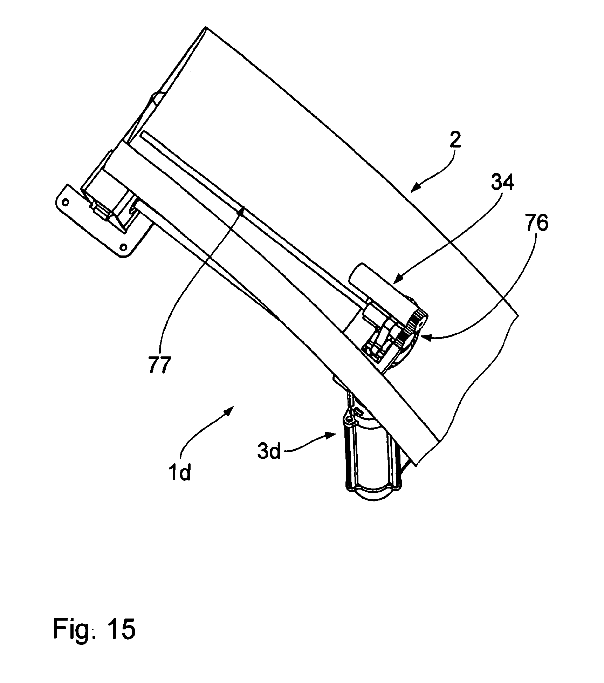

Im Folgenden wird unter Bezugnahme auf die Figuren 11 bis 15 ein viertes Ausführungsbeispiel der Erfindung beschrieben. Identische Teile erhalten dieselben Bezugszeichen wie bei den vorhergehenden Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c. Beim vierten Ausführungsbeispiel ist die Anstell-Einrichtung 4c in die Luftleiteinrichtung 2 integriert. Das Tauchrohr 26 ist hierbei an seinem der Luftleiteinrichtung 2 zugewandten Ende mittels eines Anbindungs-Elements 72 abgeschlossen. Das Anbindungs-Element 72 ist ambossförmig ausgebildet. Im Anbindungs-Element 72 ist die erste Lagerung 56c sowie das die Anstell-Schwenk-Achse 44 definierende Festlager zur Anbindung der Luftleiteinrichtung 2 an das Tauchrohr 26 angeordnet. Die Luftleiteinrichtung 2 ist mittels des hebelartig ausgebildeten Befestigungselements 46c um die Anstell-Schwenk-Achse 44 verschwenkbar gelagert. Das Befestigungs-Element 46c bildet einen Grundkörper, mit welchem die Luftleiteinrichtung 2 fest verbunden ist. Die Luftleiteinrichtung 2 kann auch einteilig mit dem Befestigungs-Element 46c ausgebildet sein.

In der ersten Lagerung 56c ist ein erster Lenk-Hebel 74 gelagert. Der erste Lenk-Hebel 74 ist mittels der zweiten Lagerung 59c verschwenkbar mit einem zweiten Lenk-Hebel 75 verbunden. Der zweite Lenk-Hebel 75 wiederum ist über die vierte Lagerung 61 c verschwenkbar mit dem Befestigungs-Element 46c verbunden. Die Anstell-Kinematik 50c weist somit vier parallel zueinander ausgerichtete Schwenk-Achsen auf. Sie bildet eine Ausgleichs-Einrichtung zum Ausgleich einer Abstandsänderung zwischen der vierten Lagerung 61 c und der ersten Lagerung 56c bei einem Verstellen des Anstellwinkels w_{A} der Luftleiteinrichtung 2.

Am zweiten Lenk-Hebel 75 ist ein Zahnrad 78 befestigt. Das Zahnrad 78 ist konzentrisch zur vierten Lagerung 61 c angeordnet. Mittels des Zahnrads 78 ist der zweite Lenk-Hebel 75 vom Anstell-Motor 34 um die durch die vierte Lagerung 61 c definierte Schwenk-Achse verschwenkbar. Der zweite Lenk-Hebel 75 ist somit drehantreibbar an den Anstell-Motor 34c gekoppelt. Das Zahnrad 78 ist Teil eines Zahnrad-Getriebes 76. Das ZahnradGetriebe 76 ist vorzugsweise als Untersetzungs-Getriebe ausgebildet. Eine Umdrehung der Antriebs-Welle 77 führt somit zu weniger als einer vollen Umdrehung des Zahnrads 78.

Der zweite Lenk-Hebel 75 kann jedoch auch direkt an eine vom Anstell-Motor 34c drehantreibbare Antriebs-Welle 77 gekoppelt sein. Die Antriebs-Welle 77 ist vorzugsweise als Verbindungs-Welle zwischen den beiden symmetrisch zur Mittel-Längs-Ebene 7 angeordneten Anstell-Einrichtungen 4c ausgebildet. Hierdurch wird eine synchrone Betätigung der rechten und linken Anstell-Einrichtung 4c sichergestellt.

Die zweite Lagerung 59c ist durch Verschwenken des zweiten Lenk-Hebels 75 um die vierte Lagerung 6 1 c durch eine Totpunktstellung hindurchführbar. Die Totpunktstellung wird hierbei genau dann eingenommen, wenn sich die zweite Lagerung 59c auf der Verbindungslinie von der ersten Lagerung 56c zur vierten Lagerung 61c befindet.

Um die Verschwenkbarkeit der Luftleiteinrichtung 2 zu begrenzen, ist ein verschiebbares Anschlag-Element 79 vorgesehen. Das Anschlag-Element 79 definiert eine Endstellung, in welcher der erste Lenk-Hebel 74 am Anschlag-Element 79 zum Anliegen kommt. Vorzugsweise ist außerdem ein zweites, entsprechendes Anschlag-Element zur Definition einer zweiten Endstellung vorgesehen.

Durch eine Verschwenkung des zweiten Lenk-Hebels 75 um die vierte Lagerung 61 c ist der Anstellwinkel w_{A} der Luftleiteinrichtung 2 verstellbar.

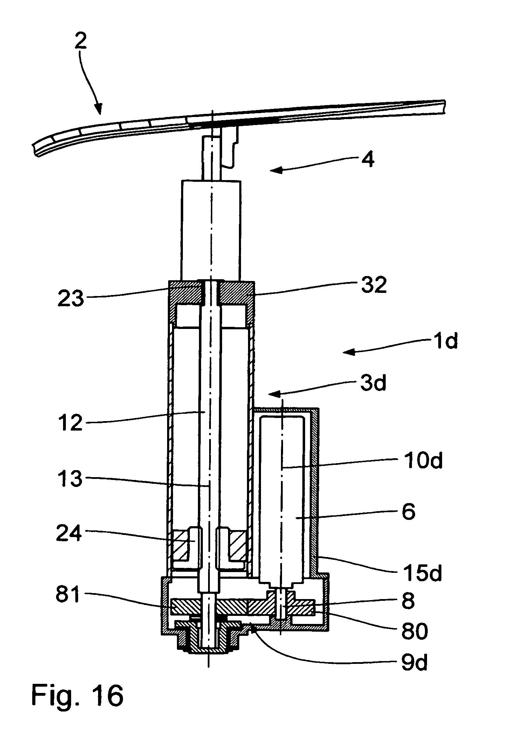

Im Folgenden wird unter Bezugnahme auf die Figur 16 ein fünftes Ausführungsbeispiel der Erfindung beschrieben. Identische Teile erhalten dieselben Bezugszeichen wie bei den vorhergehenden Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d. Beim fünften Ausführungsbeispiel ist der Elektromotor 6 der Ausstell-Einrichtungen 3d im Gehäuse 15d integriert. Die Antrieb-Wellen-Achse 10d ist in diesem Ausführungsbeispiel parallel zur Spindel-Achse 13 ausgerichtet. Die vom Elektromotor 6 antreibbare Antriebs-Welle 8 ist an ihrem dem Elektromotor 6 entgegengesetzten Ende im Gehäuse 15d gelagert. Auf der Antriebs-Welle 8 ist ein Antriebs-Zahnrad 80 vorgesehen. Dieses steht mit einem Abtriebs-Zahnrad 81 in Eingriff. Das Antriebs-Zahnrad 80 und das Abtriebs-Zahnrad 81 bilden das Getriebe 9d. Das Abtriebs-Zahnrad 81 ist drehfest mit der Spindel 12 verbunden. Die Winkel-Verstell-Einrichtung ist bei diesem Ausführungsbeispiel entsprechend einer der vorbeschriebenen Ausführungsformen ausgebildet.

## Patentansprüche

1. Vorrichtung (1; 1a; 1b; 1c; 1d) zu Verstellung einer Luftleiteinrichtung (2) an einem Kraftfahrzeug umfassend
a. mindestens eine Linear-Verstell-Einrichtung (3; 3d) zur Verstellung einer linearen Ausstellung der Luftleiteinrichtung (2), aufweisend mindestens einen ersten Spindelaktor (25), **gekennzeichnet durch**
b. mindestens eine Winkel-Verstell-Einrichtung (4; 4a; 4b; 4c) zur Verstellung eines Anstellwinkels (w_{A}) der Luftleiteinrichtung (2), aufweisend mindestens einen zweiten Spindelaktor (40),
c. wobei die Verstell-Einrichtungen (3, 4; 4a; 4b; 4c; 3d) zur Verstellung der Luftleiteinrichtung (2) in kraftübertragender Weise mit dieser verbunden sind.

2. Vorrichtung gemäß Anspruch (1), **dadurch gekennzeichnet, dass** die Verstell-Einrichtungen (3, 4; 4a; 4b; 4c; 3d) unabhängig voneinander betätigbar sind.

3. Vorrichtung gemäß einem der vorhergehenden Ansprüche, **dadurch gekennzeichnet, dass** mindestens eine der Verstell-Einrichtungen (3, 4; 4a; 4b; 4c; 3d) in stufenlosen Zwischenstellungen arretierbar ist.

4. Vorrichtung gemäß einem der vorhergehenden Ansprüche, **dadurch gekennzeichnet, dass** sowohl die mindestens eine Linear-Verstell-Einrichtung (3; 3d) als auch die mindestens eine Winkel-Verstell-Einrichtung (4; 4a; 4b; 4c) in stufenlosen Zwischenstellungen arretierbar sind.

5. Vorrichtung gemäß einem der vorhergehenden Ansprüche, **dadurch gekennzeichnet, dass** die mindestens eine Winkel-Verstell-Einrichtung (4; 4a; 4b) in der mindestens einen Linear-Verstell-Einrichtung (3; 3d) integriert ist.

6. Vorrichtung gemäß einem der Ansprüche 1 bis 4, **dadurch gekennzeichnet, dass** die mindestens eine Winkel-Verstell-Einrichtung (4c) in der Luftleiteinrichtung (2) integriert ist.

7. Vorrichtung gemäß einem der vorhergehenden Ansprüche, **dadurch gekennzeichnet, dass** die mindestens eine Verstell-Einrichtung (3, 4; 4a; 4b; 4c; 3d) eine doppelt gelagerte Spindel (12) umfasst.

8. Vorrichtung gemäß einem der vorhergehenden Ansprüche, **dadurch gekennzeichnet, dass** die mindestens eine Winkel-Verstell-Einrichtung (4; 4a; 4b; 4c) mindestens eine Kinematik (50) zur Umwandlung einer Linearbewegung in eine Schwenkbewegung aufweist.

9. Vorrichtung gemäß einem der vorhergehenden Ansprüche, **dadurch gekennzeichnet, dass** die mindestens eine Verstell-Einrichtung (3, 4; 4a; 4b; 4c; 3d) über mindestens zwei voneinander beabstandete Verbindungs-Stellen mit der Luftleiteinrichtung (2) verbunden ist.

10. Vorrichtung gemäß Anspruch 9, **dadurch gekennzeichnet, dass** die Verbindungs-Stellen der Winkel-Verstell-Einrichtung (4; 4a; 4b; 4c) mit der Luftleiteinrichtung (2) einen veränderbaren Abstand zueinander aufweisen.

11. Vorrichtung gemäß einem der Ansprüche 9 oder 10 **dadurch gekennzeichnet, dass** zum Ausgleich einer Abstands-Änderung der Verbindungs-Stellen eine Ausgleichs-Einrichtung (49; 50a; 50b; 50c) vorgesehen ist.

12. Vorrichtung gemäß Anspruch 11, **dadurch gekennzeichnet, dass** die Ausgleichs-. Einrichtung als Langloch (49), Mehrhebel-Gelenk (50a; 50c) oder Exzenter (68) ausgebildet ist.

13. Anordnung umfassend
d. eine Luftleiteinrichtung (2) für ein Kraftfahrzeug und
e. eine mit dieser in kraftübertragender Weise verbundene Vorrichtung (1) gemäß einem der vorhergehenden Ansprüche zum Verstellen derselben.

14. Kraftfahrzeug mit einer Luftleiteinrichtung gemäß einem der vorhergehenden Ansprüche.

## Claims

1. Fixture (1; 1a; 1b; 1c; 1d) for adjusting an air guiding device (2) on a motor vehicle, comprising
a. at least one linear adjustment device (3; 3d) for adjusting a linear deployment of the air guiding device (2), having at least one first spindle actuator (25), **characterized by**
b. at least one angle adjustment device (4; 4a; 4b; 4c) for adjusting an angle of attack (w_{A}) of the air guiding device (2), having at least one second spindle actuator (40),
c. wherein the adjustment devices (3, 4; 4a; 4b; 4c; 3d) are connected to the air guiding device (2) in a force-transmitting manner for adjustment of same.

2. Fixture according to Claim 1, **characterized in that** the adjustment devices (3, 4; 4a; 4b; 4c; 3d) are actuable independently of one another.

3. Fixture according to either of the preceding claims, **characterized in that** at least one of the adjustment devices (3, 4; 4a; 4b; 4c; 3d) is lockable in infinitely variable intermediate positions.

4. Fixture according to one of the preceding claims, **characterized in that** both the at least one linear adjustment device (3; 3d) and the at least one angle adjustment device (4; 4a; 4b; 4c) are lockable in infinitely variable intermediate positions.

5. Fixture according to one of the preceding claims, **characterized in that** the at least one angle adjustment device (4; 4a; 4b) is integrated in the at least one linear adjustment device (3; 3d).

6. Fixture according to one of Claims 1 to 4, **characterized in that** the at least one angle adjustment device (4c) is integrated in the air guiding device (2).

7. Fixture according to one of the preceding claims, **characterized in that** the at least one adjustment device (3, 4; 4a; 4b; 4c; 3d) comprises a doubly mounted spindle (12).

8. Fixture according to one of the preceding claims, **characterized in that** the at least one angle adjustment device (4; 4a; 4b; 4c) has at least one kinematic mechanism (50) for converting a linear movement into a pivoting movement.

9. Fixture according to one of the preceding claims, **characterized in that** the at least one adjustment device (3, 4; 4a; 4b; 4c; 3d) is connected to the air guiding device (2) via at least two spaced apart connecting points.

10. Fixture according to Claim 9, **characterized in that** the connecting points of the angle adjustment device (4; 4a; 4b; 4c) to the air guiding device (2) are at a variable distance from one another.

11. Fixture according to either of Claims 9 and 10, **characterized in that** a compensating device (49; 50a; 50b; 50c) is provided for compensating for a change in distance between the connecting points.

12. Fixture according to Claim 11, **characterized in that** the compensating device is designed as an elongated hole (49), multi-lever joint (50a; 50c) or eccentric (68).

13. Arrangement comprising
d. an air guiding device (2) for a motor vehicle, and
e. a fixture (1) according to one of the preceding claims which is connected to said air guiding device in a force-transmitting manner for adjustment of same.

14. Motor vehicle with an air guiding device according to one of the preceding claims.

## Revendications

1. Dispositif (1; 1a; 1b; 1c; 1d) pour le réglage d'un déflecteur d'air (2) sur un véhicule automobile, comprenant
a. au moins un dispositif de réglage linéaire (3; 3d) pour le réglage d'une position sortie linéaire du déflecteur d'air (2), présentant au moins un premier actionneur à broche (25),
**caractérisé par**
b. au moins un dispositif de réglage angulaire (4; 4a; 4b; 4c) pour le réglage d'un angle d'inclinaison (w_{A}) du déflecteur d'air (2), présentant au moins un deuxième actionneur à broche (40),
c. dans lequel les dispositifs de réglage (3, 4; 4a; 4b; 4c; 3d) pour le réglage du déflecteur d'air (2) sont reliés à ce dernier d'une manière apte à transmettre des forces.

2. Dispositif selon la revendication 1, **caractérisé en ce que** les dispositifs de réglage (3, 4; 4a; 4b; 4c; 3d) peuvent être actionnés indépendamment l'un de l'autre.

3. Dispositif selon l'une quelconque des revendications précédentes, **caractérisé en ce qu'**au moins un des dispositifs de réglage (3, 4; 4a; 4b; 4c; 3d) peuvent être bloqués dans des positions intermédiaires continues.

4. Dispositif selon l'une quelconque des revendications précédentes, **caractérisé en ce qu'**aussi bien ledit au moins un dispositif de réglage linéaire (3; 3d) que ledit au moins un dispositif de réglage angulaire (4; 4a; 4b; 4c) peuvent être bloqués dans des positions intermédiaires continues.

5. Dispositif selon l'une quelconque des revendications précédentes, **caractérisé en ce que** ledit au moins un dispositif de réglage angulaire (4; 4a; 4b) est intégré dans ledit au moins un dispositif de réglage linéaire (3; 3d).

6. Dispositif selon l'une quelconque des revendications 1 à 4, **caractérisé en ce que** ledit au moins un dispositif de réglage angulaire (4c) est intégré dans le déflecteur d'air (2).

7. Dispositif selon l'une quelconque des revendications précédentes, **caractérisé en ce que** ledit au moins un dispositif de réglage (3, 4; 4a; 4b; 4c; 3d) comprend une broche à double appui (12).

8. Dispositif selon l'une quelconque des revendications précédentes, **caractérisé en ce que** ledit au moins un dispositif de réglage angulaire (4; 4a; 4b; 4c) présente au moins un mécanisme (50) pour la conversion d'un mouvement linéaire en un mouvement pivotant.

9. Dispositif selon l'une quelconque des revendications précédentes, **caractérisé en ce que** ledit au moins un dispositif de réglage (3, 4; 4a; 4b; 4c; 3d) est relié au déflecteur d'air (2) par au moins deux points de liaison espacés l'un de l'autre.

10. Dispositif selon la revendication 9, **caractérisé en ce que** les points de liaison du dispositif de réglage angulaire (4; 4a; 4b; 4c) avec le déflecteur d'air (2) présentent une distance variable l'un par rapport à l'autre.

11. Dispositif selon l'une quelconque des revendications 9 ou 10, **caractérisé en ce qu'**il est prévu un dispositif de compensation (49; 50a; 50b; 50c) pour la compensation d'une variation de distance des points de liaison.

12. Dispositif selon la revendication 11, **caractérisé en ce que** le dispositif de compensation est réalisé sous la forme d'un trou oblong (49), d'une articulation à plusieurs leviers (50a; 50c) ou d'un excentrique (68).

13. Arrangement comprenant
d. un déflecteur d'air (2) pour un véhicule automobile, et
e. un dispositif (1) selon l'une quelconque des revendications précédentes, relié à ce dernier d'une façon apte à transmettre des forces, pour le réglage de ce dernier.

14. Véhicule automobile comportant un déflecteur d'air selon l'une quelconque des revendications précédentes.
